# EUROPÄISCHE PATENTSCHRIFT

(11) **EP 1 725 788 B1**
(45) Veröffentlichungstag und Bekanntmachung des Hinweises auf die Patenterteilung: **22.06.2011**
(21) Anmeldenummer: 05731993.1
(22) Anmeldetag: 21.03.2005
(51) Int. Cl.: F16G 13/16, B60R 16/02

(54) **SCHIEBET RSYSTEM**
SLIDING DOOR SYSTEM
SYSTEME DE PORTE COULISSANTE

(30) Priorität: 19.03.2004 DE 102004013974
(43) Veröffentlichungstag der Anmeldung: 29.11.2006
(73) Patentinhaber: igus GmbH, 51147 Köln (DE)
(72) Erfinder: HABERING, Richard, 51143 Köln (DE); HERMEY, Andreas, 53773 Hennef (DE); BLASE, Günter, 51429 Bergisch Gladbach (DE)
(74) Vertreter: Gudat, Axel
(86) Internationale Anmeldenummer: PCT/DE2005/000525
(87) Internationale Veröffentlichungsnummer: WO 2005/090825

(56) Entgegenhaltungen:
- PATENT ABSTRACTS OF JAPAN Bd. 1999, Nr. 09, 30. Juli 1999 (1999-07-30) -& JP 11 093514 A (TOYOTA AUTO BODY CO LTD), 6. April 1999 (1999-04-06)
- PATENT ABSTRACTS OF JAPAN Bd. 2002, Nr. 12, 12. Dezember 2002 (2002-12-12) -& JP 2002 225644 A (NISSAN SHATAI CO LTD), 14. August 2002 (2002-08-14)
- PATENT ABSTRACTS OF JAPAN Bd. 1998, Nr. 05, 30. April 1998 (1998-04-30) & JP 10 000936 A (HONDA MOTOR CO LTD), 6. Januar 1998 (1998-01-06)

## Beschreibung

Die Erfindung betrifft ein Schiebetürsystem für ein Fahrzeug mit einer eine Türöffnung aufweisenden Fahrzeugkarosserie und einer Schiebetür, mit einer an oder in der Fahrzeugkarosserie in der Nähe der Türöffnung anbringbaren Führungsschiene, einem längs der Führungsschiene verfahrbaren Führungselement, das über einen Haltearm mit der Schiebetür verbunden ist, einer Leitungsaufnahmeeinrichtung aus schwenkbar miteinander verbundenen Gliedern zur Aufnahme und Führung elektrischer Leitungen von einem Anschluss an der Fahrzeugkarosserie zu einem Anschluss an der Schiebetür, wobei die Leitungsaufnahmeeinrichtung in einer Führungsvorrichtung geführt ist.

Ein derartiges Schiebetürsystem ist aus der EP 1 010 558 A2 bekannt. Die Schiebetür weist hier in ihrem vorderen, das heißt zur Fahrzeugfront gerichteten, Bereich einen oberen und unteren Haltearm auf, an dem jeweils eine Führungsrolle als Führungselement gelagert ist. Die Führungsrollen sind in einer Führungsschiene an der Fahrzeugkarosserie oberhalb der Türöffnung bzw. unterhalb der Türöffnung verfahrbar. Um die Schiebetür beim Öffnen aus der Türöffnung hinaus und beim Schließen in die Türöffnung hineinzubewegen, sind die Führungsschienen an ihren nach vorne weisenden Enden zum Fahrzeuginneren hin gebogen.

Wie aus der genannten Druckschrift ebenfalls hervorgeht, ist parallel zur unteren Führungsschiene für die am unteren Haltearm gelagerte Rolle an der zur Türöffnung weisenden Seite eine Rinne mit einer darin geführten Leitungsaufnahmeeinrichtung angeordnet. Die Leitungsaufnahmeeinrichtung ist als Energieführungskette aus schwenkbar miteinander verbundenen Kettengliedern ausgebildet und weist ein an ihrem Ende fest mit der Fahrzeugkarosserie verbundenes unteres Trum und ein an seinem Ende am unteren Haltearm für die Schiebetür befestigtes oberes Trum auf. Das obere und untere Trum sind durch einen gebogenen Bereich der Energieführungskette miteinander verbunden.

Die aus der genannten Druckschrift bekannte Energieführungskette dient zur Aufnahme und Führung von Leitungen von einem Anschluss an der Fahrzeugkarosserie zu einem Anschluss am unteren Haltearm der Schiebetür, um verschiedene in der Schiebetür angeordnete elektrische Einrichtungen, wie z. B. einen elektrischen Antriebsmotor für die Schiebetür, mit elektrischer Energie zu versorgen.

Das die Führungsschiene mit der darin laufenden Rolle und die Führungsvorrichtung mit der darin geführten Energieführungskette umfassende System benötigt entsprechend viel Platz in dem an die Türöffnung grenzenden Bereich der Fahrzeugkarosserie. Insbesondere muss für die Führungsvorrichtung der Energieführungskette genügend Raum zwischen der Führungsschiene und der Türöffnung vorgesehen sein. Bei nachträglicher Installation der aus Führungsvorrichtung und Leitungsaufnahmeeinrichtung bestehenden Einheit kann daher der zur Verfügung stehende Raum problematisch sein, so dass Änderungen der Fahrzeugkarosserie in dem betreffenden Bereich erforderlich sind.

Das japanische Abstract 11093514 beschreibt ein Schiebetürsystem für ein Fahrzeug mit einer durch einen Elektromotor angetriebenen Antriebsrolle und einem zwischen der Antriebsrolle und weiteren angetriebenen Rollen umlaufenden Zahnriemen. Da der Zahnriemen über einen Traktionsarm mit einem Tragelement für eine Rolle verbunden ist, wird eine Schiebetür gezogen und die Fahrzeugöffnung wird geöffnet oder geschlossen. Ein elektrisches Zuführkabel wird bei der Öffnungs- oder Schließbewegung der Tür von der Rolle gegen die Federkraft einer Spiralfeder abgewickelt oder auf diese aufgewickelt. Das von der Rolle abgewickelte elektrische Zuführkabel wird nicht nach außen hin exponiert, da es in einer unteren Schiene angeordnet ist.

Das japanische Abstract 2002225644 beschreibt ein Schiebetürsystem für ein Fahrzeug mit einer Ankoppelungseinrichtung, welche innerhalb einer Führung mit einer Anzahl von zwischen einem Endstück und einem Basisendstück angeordneten Zwischenstücken angeordnet ist und welche aus einer lang gestreckten geringfügig bogenförmigen Anordnung in eine im Wesentlichen U-förmige gebogene Anordnung überführbar ist. An einer an einer Schiebetür befestigten Rollenbefestigung ist eine Umlenkung befestigt, welche ein vollständig geöffnetes Umlenkführungsstück und ein vollständig geschlossenes Umlenkführungsstück aufweist, welche in Kontakt mit dem Ende der Führung der Ankoppelungseinrichtung sowohl bei dem Beginn der Öffnungsbewegung der Tür und bei dem Beginn der Schließbewegung der Tür vorgesehen ist, um die Umlenkung der Führung der Ankoppelungseinrichtung in der entgegengesetzten Richtung zu beschränken.

Der vorliegenden Erfindung liegt die Aufgabe zugrunde, ein Schiebetürsystem bereitzustellen, das eine platzsparende Konstruktion aufweist und zum nachträglichen Einbau einer Leitungsaufnahmeeinrichtung zur Energieversorgung der Schiebetür geeignet ist.

Die Aufgabe wird erfindungsgemäß durch ein Schiebetürsystem der eingangs genannten Art mit den Merkmalen des Anspruchs 1 gelöst.

Aufgrund dieser Maßnahme kann der für die Führungsschiene der Schiebetür und die Führungsvorrichtung für die Leitungsaufnahmeeinrichtung erforderliche Raum erheblich reduziert werden, da eine separate Anordnung von Führungsschiene und Führungsvorrichtung vermieden wird. Auch ist kein spezieller Aufwand zur Ausbildung der Führungsvorrichtung für die Leitungsaufnahmeeinrichtung notwendig. In die vorhandene Führungsschiene für die Schiebetür kann nachträglich eine geeignete Leitungsaufnahmeeinrichtung zur Energieversorgung der Schiebetür installiert werden.

Gemäß der Erfindung werden in der Führungsvorrichtung, die als Führungsvorrichtung ausgebildet sein kann, sowohl das Führungselement für die Schiebetür als auch ein Trum der Leitungsaufnahmeeinrichtung verfahren. Das Trum ist bevorzugt an seinem Ende mit dem Führungselement oder dem Haltearm für die Schiebetür verbunden, so dass die Leitungen dort austreten und über den Haltearm der Schiebetür zugeführt werden können.

Da die Leitungsaufnahmeeinrichtung an ihrem anderen Ende einen festen Anschluss an der Fahrzeugkarosserie aufweist, benötigt sie einen an das erste Trum anschließenden bogenförmigen Bereich, der durch die schwenkbar miteinander verbundenen Glieder der Leitungsaufnahmeeinrichtung gebildet wird und in ein zweites Trum übergeht, das mit dem ersten Anschluss verbunden ist. Beim Verfahren des beweglichen Endes der Leitungsaufnahmeeinrichtung in Richtung des ersten Trums werden dieses Trum verkürzt und das zweite Trum verlängert, während bei entgegengesetzter Bewegung das erste Trum verlängert und das zweite Trum verkürzt werden.

Um in der Führungsschiene bzw. Führungsvorrichtung möglichst viel Platz zu sparen, ist diese zweckmäßigerweise so ausgelegt, dass lediglich das erste, mit dem Führungselement oder Haltearm der Schiebetür verbundene Trum darin abgelegt ist, während der bogenförmige Bereich mit dem anschließenden zweiten Trum sich außerhalb der Führungsschiene und Führungsvorrichtung erstreckt. Bei dieser Ausgestaltung ist der feste Anschluss des zweiten Trums an der Fahrzeugkarosserie außerhalb der Führungsschiene und Führungsvorrichtung angeordnet. Der sich aus der Führungsschiene und Führungsvorrichtung heraus erstreckende Bereich des ersten Trums, der bogenförmige Bereich und das zweite Trum der Leitungsaufnahmeeinrichtung können in einen an die Führungsschiene und Führungsvorrichtung angeschlossenen Gehäuse geführt sein. Weiterhin können sich der aus der Führungsschiene und Führungsvorrichtung heraus erstreckende Bereich des ersten Trums linear zu dem in der Führungsvorrichtung geführten Bereich des ersten Trums und das zweite Trum parallel zum ersten Trum erstrecken. Es kann jedoch aufgrund der Konstruktion der Fahrzeugkarosserie und aus Platzgründen zweckmäßig sein, den aus der Führungsschiene und Führungsevorrichtung heraustretenden Bereich des ersten Trums um einen bestimmten Winkel in eine bestimmte Richtung , z. B. in einer Säule der Fahrzeugkarosserie, umzulenken, so dass das Führungsgehäuse für diesen Bereich des ersten Trums, den bogenförmigen Bereich und das zweite Trum entsprechend im Anschluss an die Führungsvorrichtung angeordnet werden kann. Die Umlenkung des ersten Trums kann durch eine entsprechende Umlenkeinrichtung für die Leitungsaufnahmeeinrichtung erfolgen.

Besteht die Leitungsaufnahmeeinrichtung aus lediglich in einer Ebene schwenkbar miteinander verbundenen Gliedern, wobei die Schwenkachsen der Glieder alle parallel verlaufen, so erfolgt auch die Umlenkung des ersten Trums in dieser Ebene. Insbesondere kann die Umlenkung, wie z.B. in einer Säule der Fahrzeugkarosserie, 90° nach oben oder nach unten betragen, wenn die Leitungsaufnahmeeinrichtung in der Führungsschiene so angeordnet ist, dass die Schwenkachsen der Glieder horizontal gerichtet sind. Die Umlenkung kann bei einer solchen Leitungsaufnahmeeinrichtung auch 180° nach oben oder nach unten betragen.

Die Umlenkung kann bei einer Leitungsaufnahmeeinrichtung, die in der Führungsschiene so angeordnet ist, dass die Schwenkachsen der Glieder vertikal gerichtet sind, um einen geeigneten Winkel auch in einer horizontalen Ebene erfolgen. Bei einer Leitungsaufnahmeeinrichtung, deren Glieder nicht nur in einer Ebene schwenkbar miteinander verbunden sind, sondern einen weiteren, quer zu dieser Ebene gerichteten Schwenkfreiheitsgrad aufweisen, kann die Umlenkung für jede beliebige Raumrichtung vorgesehen sein.

Insbesondere kann die Führungsschiene und Führungsvorrichtung außen an oder in der Fahrzeugkarosserie in dem Bereich angeordnet sein, über den die Schiebetür beim Öffnen und Schließen bewegt wird. Der Haltearm für die Schiebetür ist dann im hinteren, das heißt zum Fahrzeugheck gerichteten, Endbereich der Schiebetür angeordnet.

Die Führungsschiene und Führungsvorrichtung kann andererseits auch an oder im unteren oder oberen Bereich der Fahrzeugkarosserie längs der Türöffnung angeordnet sein, wobei der Haltearm dann am vorderen, das heißt zur Fahrzeugfront gerichteten, Endbereich der Schiebetür angeordnet ist.

Da die Schiebetür zum Öffnen und Schließen aus der Türöffnung heraus bzw. in die Türöffnung hinein bewegt werden muss und sich dabei der Abstand zwischen der Stelle, an der der Haltearm an der Schiebetür befestigt ist, und der Führungsschiene ändert, weist der Haltearm zweckmäßigerweise zwei um eine im Wesentlichen vertikale Achse schwenkbar miteinander verbundene Armteile auf. Der Haltearm kann mit einer weiteren Schwenkachse schwenkbar an der Schiebetür und/oder am Führungselement gelagert sein.

Um die beim Öffnen und Schließen der Schiebetür senkrecht zur Ebene der Türöffnung gerichtete Bewegungskomponente zu kompensieren, kann die Führungsschiene in ihrem vorderen, das heißt zur Fahrzeugfront gerichteten, Endbereich eine im Wesentlichen horizontal verlaufende Krümmung aufweisen.

In einer bevorzugten Weiterbildung der Erfindung ist das bewegliche Ende der Leitungsaufnahmeeinrichtung über ein Anschlusselement mit dem Führungselement oder dem Haltearm verbunden.

Bei einem horizontal gekrümmten Endbereich der Führungsschiene ist das Anschlusselement gegenüber dem Führungselement um eine im Wesentlichen senkrechte Achse verschwenkbar ausgebildet.

Um dem gekrümmten Endbereich der Führungsschiene zu folgen, können auch die Glieder der Leitungsaufnahmeeinrichtung mindestens in dem betreffenden Bereich in horizontaler Ebene über einen bestimmten Winkel schwenkbar miteinander verbunden sein. Die Leitungsaufnahmeeinrichtung kann dazu so in der Führungsschiene angeordnet sein, dass sich die Schwenkachsen der Glieder in vertikaler Richtung erstrecken. Liegen die Schwenkachsen der Glieder in horizontaler Ebene ist eine zusätzliche Verschwenkbarkeit der Glieder in dieser Ebene erforderlich.

Eine Verschwenkung der Glieder der Leitungsaufnahmeeinrichtung in horizontaler Ebene kann jedoch dadurch vermieden werden, dass die Leitungsaufnahmeeinrichtung in jeder Position des Verfahrweges in einem geraden Abschnitt der Führungsschiene verbleibt. Dazu kann das betreffende Ende der Leitungsaufnahmeeinrichtung durch ein sich in dessen Längsrichtung erstreckendes Anschlusselement von dem Führungselement oder dem Haltearm derart beabstandet sein, dass, wenn diese sich in der Endposition des Verfahrwegs befinden, das Ende in dem geraden Teil der Führungsschiene zum Halten kommt.

In einer bevorzugten Weiterbildung der Erfindung sind die elektrischen Leitungen, die aus dem beweglichen Ende der Leitungsaufnahmeeinrichtung heraustreten, über den Haltearm der Schiebetür zugeführt. Dazu können geeignete Befestigungsvorrichtungen und/oder die Leitungen schützende Führungen am Haltearm vorgesehen sein.

In einer besonders zweckmäßigen Ausgestaltung kann die Führungsschiene kanalförmig mit einer sich in Längsrichtung erstreckenden Öffnung ausgebildet sein, durch die sich der Haltearm erstreckt. Bei dieser Ausführung kann das Führungselement mindestens eine Rolle aufweisen, die um eine im Wesentlichen horizontale Achse drehbar in der kanalförmigen Führungsschiene angeordnet und am Haltearm gelagert ist.

In einer zweckmäßigen Ausbildung der Leitungsaufnahmeeinrichtung weist diese ein Endglied auf, das über ein bügelförmiges Teil mit dem Führungselement oder einem sich in die Führungsschiene hinein erstreckenden Teil des Haltearms verbunden ist. Insbesondere bei in horizontaler Ebene gekrümmter Führungsschiene ist das bügelförmige Teil am Endglied und/oder an dem sich in die Führungsschiene hinein erstreckenden Teil des Haltearms um eine im Wesentlichen vertikale Achse schwenkbar gelagert.

Vorzugsweise wird der zumindest der benachbart dem Führungselement angeordnete Bereich der Leitungsaufnahmeeinrichtung oder der gesamte Bereich der Leitungsaufnahmeeinrichtung bis zum Umlenkbereich derselben unmittelbar in der Spur des Führungselementes verfahren. Die Führungsschiene für das Führungselement der Schiebetür muss somit praktisch nicht oder nicht verbreitert werden.

An einem zu einem Fahrzeugende gerichteten Ende der Führungsschiene, d.h. zur Fahrzeugfront oder zum Fahrzeugheck hin gerichtet, ist ein Umlenkbereich für die Leitungsaufnahmeeinrichtung vorgesehen, durch den diese beim Verfahren in Richtung auf das Fahrzeugende um einen bestimmten Winkel in eine bestimmte Richtung umgelenkt wird, und an den Umlenkbereich eine kanalförmige Führung angeschlossen ist, in der sich der umgelenkte Abschnitt der Leitungsaufnahmeeinrichtung als ein erstes Trum erstreckt, an das sich ein im wesentlichen halbkreisförmiger Bogen mit einem vorbestimmten Radius und an diesen ein zweites Trum anschließen, dessen Ende stationär mit der Fahrzeugkarosserie verbunden ist.

Bei einer besonders platzsparenden Ausführung des erfindungsgemäßen Schiebetürsystems weist die Führungsschiene an ihrem hinteren, das heißt zum Fahrzeugheck gerichteten, Ende einen Umlenkbereich für die Leitungsaufnahmeeinrichtung auf, durch den diese beim Verfahren in Richtung zum Fahrzeugheck um einem bestimmten Winkel in eine bestimmte Richtung umgelenkt wird. An den Umlenkbereich schließt sich zweckmäßigerweise eine kanalförmige Führung an, in der sich der umgelenkte Abschnitt der Leitungsaufnahmeeinrichtung als ein erstes Trum erstreckt, an das sich ein im Wesentlichen halbkreisförmiger Bogen mit einem vorbestimmten Radius und an diesen ein zweites Trum anschließen, dessen Ende stationär mit der Fahrzeugkarosserie verbunden ist.

Der Umlenkbereich für die Leitungsaufnahmeeinrichtung kann somit am hinteren, zum Fahrzeugheck gerichteten Ende der Führungsschiene vorgesehen sein, durch den diese beim Verfahren in Richtung zum Fahrzeugheck um einen bestimmten Winkel in eine bestimmte Richtung umgelenkt wird.

Als Mittel zur Umlenkung der Leitungsaufnahmeeinrichtung kann insbesondere das zu einem Fahrzeugende gerichtete Ende der Führungsschiene oder ein kanal- oder gehäuseartiger Bereich der Führungsvorrichtung vorgesehen sein. Die Umlenkung kann somit "frei", d.h. ohne weitere Hilfsmittel erfolgen, wobei selbstverständlich eine geeignete Formgebung des Führungsbereichs der Führungsvorrichtung gegeben sein kann. Insbesondere kann die Umlenkung an einem ortsfesten Teil erfolgen, auf bewegliche Teile zur Umlenkung der Leitungsaufnahmeeinrichtung kann vollständig verzichtet werden. Die Umlenkung kann somit im wesentlichen oder vollständig durch Teile erfolgen, die zur gehäuseartigen Einkapselung oder zur Aufnahme der Leitungsaufnahmeeinrichtung ohnehin erforderlich sind. Die Umlenkeinrichtung kann hierbei als separates Teil der Führungsvorrichtung ausgebildet und gegebenenfalls von benachbarten Bereichen derselben beabstandet sein. Die Umlenkung kann somit an der nach außen gekrümmten Seite der Leitungsaufnahmeeinrichtung erfolgen. Durch die freie Umlenkung ist die gesamte Anordnung besonders platzsparend, wenig störanfällig und einfach zu warten bzw. die Leitungsaufnahmeeinrichtung einfach austauschbar.

Die Umlenkung des ersten Trums der Leitungsaufnahmeeinrichtung an dem zu einem Fahrzeugende gerichtete Ende der Führungsschiene kann beispielsweise um ca. 90° oder um ca. 120° bis ca. 180°, insbesondere ca. 180°, erfolgen.

Die Krümmung der Umlenkung des ersten Trums der Leitungsaufnahmeeinrichtung an dem zu einem Fahrzeugende gerichtete Ende der Führungsschiene und die im wesentlichen halbkreisförmige Umlenkung der Leitungsführungseinrichtung zwischen erstem und zweitem Trum bezogen auf die Längserstreckung der Leitungsführungseinrichtung sind gleichsinnig. Das zweite Trum kann somit in einem Bereich angeordnet sein, der zwischen den beiden Teilbereichen des ersten Trums eingeschlossen ist, wobei die beiden Teilbereiche sich jeweils an die Umlenkung anschließen.

Die benachbart der Schiebetür im wesentlichen horizontal geführte Leitungsaufnahmeeinrichtung im Umlenkbereich in eine im wesentlichen vertikale Richtung, d.h. bezogen auf das Fahrzeug nach "oben" oder "unten" oder in eine Richtung entgegengesetzt der Bewegungsrichtung der zu öffnenden Schiebetür erfolgen.

Die kanalförmige Führung kann insbesondere als langgestrecktes im Wesentlichen quaderförmiges Gehäuse ausgebildet sein, in dessen einer Stirnseite eine Öffnung zur Durchführung des umgelenkten Abschnitts der Leitungsaufnahmeeinrichtung ausgebildet ist und in dem an zwei gegenüberliegenden Längsseiten die jeweils nach außen weisenden Seiten der Trums geführt sind. Zweckmäßigerweise ist die kanalförmige Führung in einer Säule der Fahrzeugkarosserie angeordnet.

Das erfindungsgemäße Schiebetürsystem kann eine Antriebseinrichtung zur Bewegung der Schiebetür längs der Führungsschiene aufweisen.

In einer zweckmäßigen Ausführung weist die Antriebseinrichtung einen in der Fahrzeugkarosserie angeordneten reversiblen Motor und eine vom Motor angetriebene Zugeinrichtung auf, die in Längsrichtung der Führungsschiene mit beiden Seiten des Haltearms verbunden ist oder am Haltearm befestigt ist und mit der der Haltearm längs der Führungsschiene in beiden Richtungen in Abhängigkeit von der Drehrichtung des Motors verfahrbar ist.

Die Zugeinrichtung kann zwei mit jeweils einer Seite des Haltearms verbundene Kabelstränge aufweisen, die längs der Führungsschiene verlaufen und an deren Enden zu einer Antriebseinheit umgelenkt werden, die in Abhängigkeit von der Drehrichtung des Motors eine Zugkraft auf den einen oder anderen Kabelstrang ausübt.

Andererseits kann die Zugeinrichtung durch einen Zahnriemen gebildet sein, der vom Motor über ein Ritzel antreibbar ist. Der Zahnriemen kann entweder als Endlosriemen mit einer Stelle am Haltearm befestigt sein oder an seinen Enden mit dem Haltearm verbunden sein und wird durch Umlenkrollen geführt.

In einer anderen Ausführung kann die Antriebseinrichtung einen in der Schiebetür angeordneten Motor, ein vom Motor angetriebenes und am Haltearm angeordnetes Ritzel und eine mit dem Ritzel kämmende längs der Führungsschiene verlaufende Zahnreihe aufweisen.

Wenn die Führungsschiene und Führungsvorrichtung außen an der Fahrzeugkarosserie in dem Bereich angeordnet ist, über den die Schiebetür geschoben wird, ist zur unterstützenden Führung der Schiebetür bevorzugt mindestens eine zweite Führungsschiene an der Fahrzeugkarosserie im oberen und/oder unteren Bereich längs der Türöffnung vorgesehen, längs der ein zweites Führungselement verfahrbar ist, das über einen zweiten Haltearm mit dem vorderen, das heißt zur Fahrzeugfront gerichteten, Bereich der Schiebetür verbunden ist.

Ausführungsbeispiele der vorliegenden Erfindung werden im Folgenden anhand der Zeichnung näher erläutert. In der Zeichnung zeigen:
- Fig. 1: eine perspektivische Darstellung eines Schiebetürsys- tems mit geschlossener Schiebetür,
- Fig. 2: eine Seitenansicht des in Figur 1 gezeigten Schiebetür- systems,
- Fig. 3: eine Draufsicht auf das in Figur 1 gezeigte Schiebetür- system,
- Fig. 4: eine perspektivische Ansicht des Schiebetürsystems mit geöffneter Schiebetür,
- Fig. 5: eine Seitenansicht des in Figur 4 gezeigten Schiebetür- systems,
- Fig. 6: eine Draufsicht auf das in Figur 4 gezeigte Schiebetür- system,
- Fig. 7: eine perspektivische Darstellung einer zweiten Ausfüh- rung eines Schiebetürsystems mit geschlossener Schiebe- tür,
- Fig. 8: eine Seitenansicht des in Figur 7 gezeigten Schiebetür- systems,
- Fig. 9: eine Draufsicht auf das in Figur 7 gezeigte Schiebetür- system,
- Fig. 10: eine perspektivische Ansicht des Schiebetürsystems mit geöffneter Schiebetür
- Fig. 11: eine Seitenansicht des in Figur 10 gezeigten Schiebe- türsystems,
- Fig. 12: eine Draufsicht auf das in Figur 10 gezeigte Schiebe- türsystem,
- Fig. 13: eine perspektivische Ansicht einer weiteren Ausfüh- rung eines Schiebetürsystems mit geschlossener Schiebe- tür
- Fig. 14: eine Seitenansicht des in Figur 13 gezeigten Schiebe- türsystems,
- Fig. 15: eine Draufsicht auf das in Figur 13 gezeigte Schiebe- türsystem,
- Fig. 16: eine perspektivische Ansicht des Schiebetürsystems mit geöffneter Schiebetür,
- Fig. 17: eine Seitenansicht des in Figur 16 gezeigten Schiebe- türsystems,
- Fig. 18: eine Draufsicht auf das in Figur 16 gezeigte Schiebe- türsystem,
- Fig. 19: eine perspektivische Ansicht eines weiteren Ausfüh- rungsbeispiels eines Schiebetürsystems mit geschlossener Schiebetür,
- Fig. 20: eine Seitenansicht des in Figur 19 gezeigten Schiebe- türsystems,
- Fig. 21: eine Draufsicht auf das in Figur 19 gezeigte Schiebe- türsystem,
- Fig. 22: eine perspektivische Ansicht des Schiebetürsystems mit geöffneter Schiebetür,
- Fig. 23: eine Seitenansicht des in Figur 22 gezeigten Schiebe- türsystems
- Fig. 24: eine Draufsicht auf das in Figur 22 gezeigten Schiebe- türsystem
- Fig. 25: eine perspektivische Ansicht eines weiteren Ausfüh- rungsbeispiels eines Schiebetürsystems mit geschlossener Schiebetür,
- Fig. 26: eine Seitenansicht des in Figur 25 gezeigten Schiebe- türsystems,
- Fig. 27: eine Draufsicht auf das in Figur 25 gezeigte Schiebe- türsystem,
- Fig. 28: eine perspektivische Ansicht des Schiebetürsystems mit geöffneter Schiebetür,
- Fig. 29: eine Seitenansicht des in Figur 28 gezeigten Schiebe- türsystems und
- Fig. 30: eine Draufsicht auf das in Figur 28 gezeigte Schiebe- türsystem

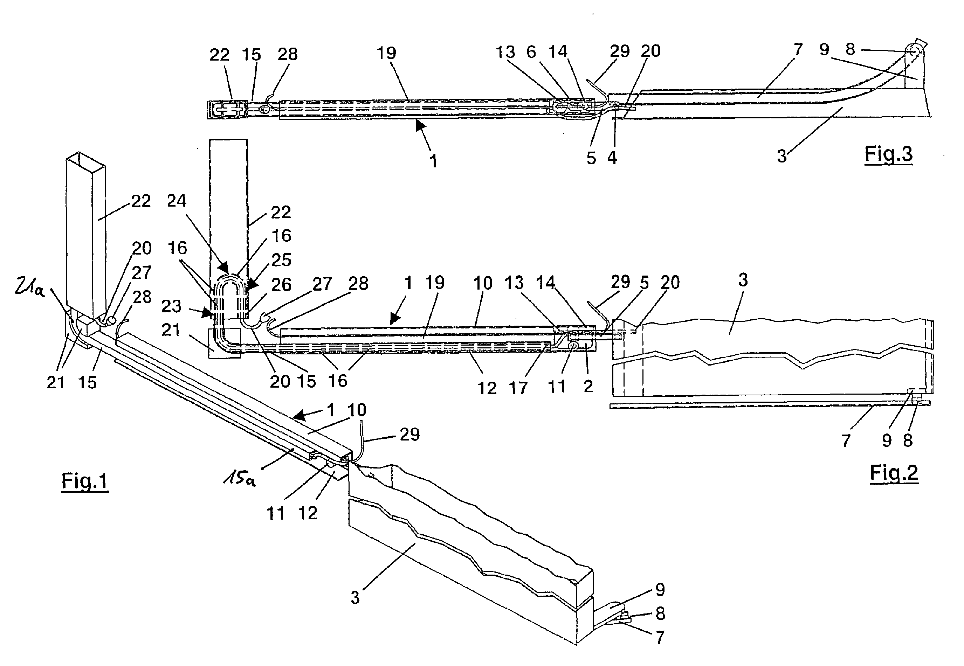

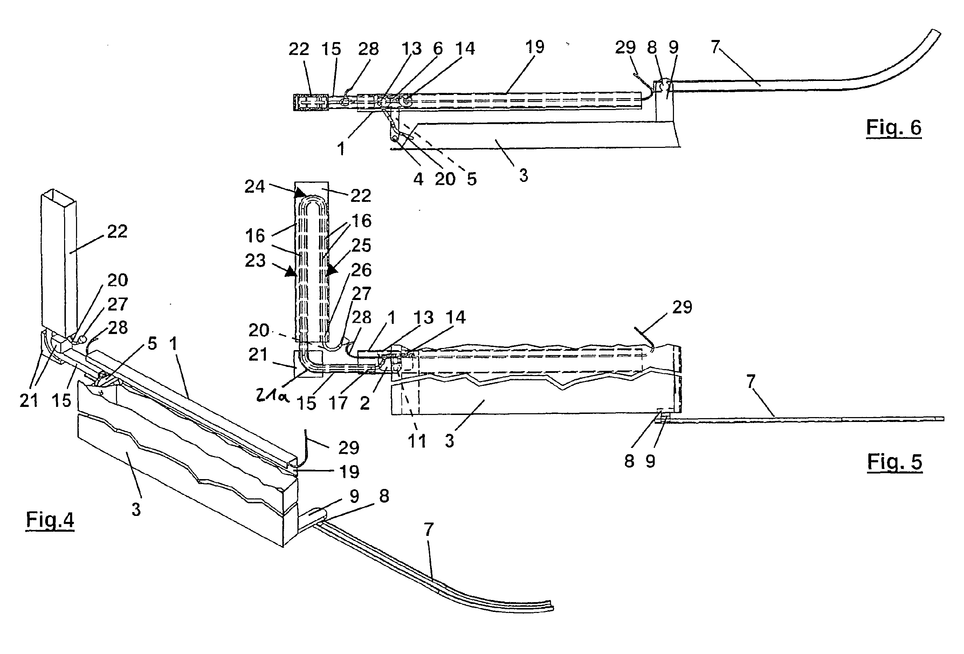

Wie aus den Figuren 1 bis 6, umfassen das dort gezeigte Schiebetürsystem eine erste Führungsschiene 1, in der ein erstes Führungselement 2 in Längsrichtung der Führungsschiene 1 verfahrbar angeordnet ist. Die Führungsschiene 1 ist in der Außenseite einer (in der Zeichnung nicht dargestellten) Fahrzeugkarosserie in der Nähe einer Türöffnung angeordnet, die durch eine Schiebetür 3 verschließbar ist. Die Führungsschiene 1 ist, wie insbesondere aus den Figuren 4 bis 6 hervorgeht, in dem Bereich der Fahrzeugkarosserie in der Nähe der Türöffnung angeordnet, über den die Schiebetür 3 beim Öffnen und Schließen geschoben wird.

An der Schiebetür 3 ist über ein Gelenk 4 mit vertikaler Schwenkachse ein Haltearm 5 gelagert, der an seinem anderen Ende über ein Gelenk 6 mit ebenfalls vertikaler Schwenkachse mit dem Führungselement 2 gelenkig verbunden ist.

Wie in den Figuren 1 bis 3 gezeigt ist, erstreckt sich der Haltearm 5 bei geschlossener Schiebetür 3 im wesentlichen in Längsrichtung der ersten Führungsschiene 1 zur Schiebetür 3 hin. Beim Öffnen der Schiebetür 3 wird diese aus der Türöffnung nach außen längs einer gebogenen Bewegungsbahn geführt, wobei der Haltearm 5 nach außen geschwenkt wird, wie in den Figuren 4 bis 6 dargestellt.

Zur Unterstützung der Führung der Schiebetür 3 ist eine zweite Führungsschiene 7 in der Fahrzeugkarosserie im unteren Bereich längs der Türöffnung vorgesehen, wie im rechten Bereich der Figuren 1 bis 6 gezeigt ist. Der vordere, d.h. zur Fahrzeugfront gerichtete, Bereich der zweiten Führungsschiene 7 ist zum Fahrzeuginneren hin gekrümmt ausgebildet, um die Schiebetür 3 beim Öffnen aus der Türöffnung hinaus und beim Schließen in die Türöffnung hinein zu führen. In der zweiten Führungsschiene 7 ist ein zweites Führungselement 8 längs der Führungsschiene 7 verfahrbar angeordnet, das über einen Haltearm 9 mit dem vorderen, d.h. zur Fahrzeugfront gerichteten, Bereich der Schiebetür 3 verbunden ist. Die zweite Führungsschiene 7 ist rinnenförmig ausgebildet und nach oben geöffnet. Das zweite Führungselement 8 weist eine Rolle auf, die in der rinnenförmigen Führungsschiene 7 verfahrbar ist.

Eine dritte Führungsschiene, die entsprechend der zweiten Führungsschiene 7 ausgebildet ist, ist im oberen Bereich der Fahrzeugkarosserie oberhalb der Türöffnung (in der Zeichnung nicht gezeigt) vorgesehen. Die dritte Führungsschiene unterstützt die Führung der Schiebetür 3 über einen im oberen, vorderen Bereich der Schiebetür angebrachten Haltearm (entsprechend dem zweiten Haltearm 9), an dem ein drittes Führungselement (entsprechend dem zweiten Führungselement 8), in Form einer Rolle angeordnet ist, die in der dritten Führungsschiene verfahrbar ist.

Die erste Führungsschiene 1 ist kanalförmig ausgebildet, mit einer sich in Längsrichtung und nach außen erstreckenden Öffnung, durch die der erste Haltearm 5 greift. Die Oberseite 10 der Führungsschiene 1 ist in Form eines umgekehrten U gestaltet.

Das erste Führungselement 2 ist in Gestalt eines Wagens ausgebildet, der mit einer unteren Rolle 11 auf dem Boden 12 der kanalförmigen Führungsschiene 1 verfahrbar ist. Der Wagen weist weiterhin zwei im Abstand in Längsrichtung der Führungsschiene 1 beabstandete seitliche Führungsrollen 13, 14 auf, die längs der Innenwände der seitlichen Schenkel der U-förmigen Oberseite 10 laufen. Das als Wagen ausgebildete erste Führungselement 2 ist somit ohne Gefahr eines Verkantens aufgrund der beim Öffnen und Schließen der Schiebetür 3 seitlich durch den Haltearm 5 ausgeübten Kräfte in der Führungsschiene 1 verfahrbar.

Wie weiterhin aus den Figuren 1 - 6 hervorgeht, ist in der ersten Führungsschiene 1 eine Leitungsaufnahmeeinrichtung 15 längs der Führungsschiene 1 verfahrbar angeordnet, die aus um horizontale Schwenkachsen schwenkbar miteinander verbundenen Gliedern 16 besteht. Die Glieder 16 weisen (in der Zeichnung im Einzelnen nicht dargestellt) Seitenteile und diese verbindende obere und untere Querstege auf und sind durch Gelenkverbindungen an den gegenüberliegenden Endbereichen ihrer Seitenteile gegeneinander verschwenkbar. Die Schwenkverbindung der Glieder 16 kann auch durch andere bekannte Mittel, wie z.B. biegeelastische Verbindungen zwischen den Gliedern, bewirkt werden.

Die somit als Kette ausgebildete Leitungsaufnahmeeinrichtung dient zur Aufnahme und Führung elektrischer Leitungen von einem Anschluss an der Fahrzeugkarosserie zu einem Anschluss in der Schiebetür 3, wobei die Leitungen in der Schiebetür 3 vorgesehene elektrische Einrichtungen mit elektrischer Energie versorgen.

Die als Energieführungskette ausgebildete Leitungsaufnahmeeinrichtung 15 ist an einem Ende mit einem Endglied 17 versehen, das über ein Anschlusselement mit dem als Wagen ausgebildeten ersten Führungselement 2 verbunden ist. Beim Verfahren des Führungselements 2 wird die Leitungsaufnahmeeinrichtung 15 längs der Führungsschiene 1 hin- und herbewegt. Dabei gleitet der in der Führungsschiene 1 verlaufende Teil der Leitungsaufnahmeeinrichtung 15 auf dem Boden 12 der kanalförmigen Führungsschiene 1 und wird durch deren zum Fahrzeuginneren weisenden Seitenwand 19 seitlich geführt.

Die aus dem Endglied 17 der Leitungsaufnahmeeinrichtung 15 heraustretenden Leitungen 20 werden über den Haltearm 5 einem Anschluss in der Schiebetür 3 zugeführt.

In den Figuren 1-6 aber auch den anderen Ausführungsbeispielen wird der benachbart dem Führungselement angeordnete Bereich 15a der Leitungsaufnahmeeinrichtung 15, hier sogar der sich bis zu dem Umlenkbereich 21 erstreckende Bereich derselben, unmittelbar in der Spur des Führungselementes verfahren.

Den Figuren 1 bis 6 ist weiterhin zu entnehmen, dass die Leitungsaufnahmeeinrichtung 15 an dem von der Schiebetür 3 abgewandten Ende der ersten Führungsschiene 1 herausgeführt und durch eine Umlenkeinrichtung 21 nach oben in ein weiteres Führungsgehäuse 22 hinein geleitet wird. Der sich über die Umlenkeinrichtung 21 in das Führungsgehäuse 22 hinein erstreckende Bereich der Leitungsaufnahmeeinrichtung 15 bildet ein erstes Trum 23, an das sich ein im wesentlichen halbkreisförmiger Bogen 24 und daran ein zweites Trum 25 anschließen. Am freien Ende des zweiten Trums 25 ist die Leitungsaufnahmeeinrichtung 15 durch ein Endglied 26 am Führungsgehäuse 22 befestigt und somit stationär gegenüber der Fahrzeugkarosserie angeordnet.

Wie insbesondere ein Vergleich der Figuren 2 und 5 zeigt, dient das Führungsgehäuse 22 als Reservoir, in das sich die Leitungsaufnahmeeinrichtung 15 mehr oder weniger hineinerstrecken kann, wenn das mit der Schiebetür 3 verbundene, als Wagen ausgebildete Führungselement 2 mit dem daran anschließenden Teil der Leitungsaufnahmeeinrichtung 15 in der ersten Führungsschiene 1 verfahren wird.

Das Führungsgehäuse 22 ist in platzsparender Weise in einer Säule der Fahrzeugkarosserie angeordnet. Somit kann die Leitungsaufnahmeeinrichtung 15 mit der Umlenkeinrichtung 21 und dem senkrechten Führungsgehäuse 22 auch nachträglich in eine Fahrzeugkarosserie mit einer ersten Führungsschiene 1 zur Führung eines mit der Schiebetür 3 verbundenen Haltearms 5 installiert werden.

Wie aus der Zeichnung ersichtlich, werden die aus dem Endglied 26 austretenden elektrischen Leitungen 20 durch einen Stecker 27 mit einem Anschluss an der Fahrzeugkarosserie verbunden.

Zur Bewegung der Schiebetür 3 längs der Führungsschienen 1 und 7 ist eine (in der Zeichnung nicht dargestellte) Antriebseinrichtung vorgesehen, die einen in der Fahrzeugkarosserie angeordneten reversiblen Motor und eine vom Motor angetriebene Zugeinrichtung aufweist, die in Längsrichtung der Führungsschiene 1 mit dem als Wagen ausgebildeten Führungselement 2 verbunden ist und mit der das Führungselement 2 längs der Führungsschiene 1 in beiden Richtungen in Abhängigkeit von der Drehrichtung des Motors verfahrbar ist. Die Zugeinrichtung weist zwei mit jeweils einer Seite des Führungselements 2 verbundene Kabelstränge 28 und 29 auf, die längs der Führungsschiene 1 verlaufen und an deren Enden durch (in der Zeichnung nicht dargestellte) Umlenkrollen zu einer Antriebseinheit umgelenkt werden, die in Abhängigkeit von der Drehrichtung des Motors eine Zugkraft auf den einen oder anderen Kabelstrang 28, 29, ausübt.

An einem zu einem Fahrzeugende, in den Figuren nach "links" zum Fahrzeugheck hin, gerichteten Ende der Führungsvorrichtung (oder auch der Führungsschiene) ist ein Umlenkbereich für die Leitungsaufnahmeeinrichtung 15 vorgesehen ist, durch den diese beim Verfahren in Richtung auf das Fahrzeugende um einen bestimmten Winkel in eine bestimmte Richtung umgelenkt wird, und an den Umlenkbereich eine kanalförmige Führung angeschlossen ist, in der sich der umgelenkte Abschnitt der Leitungsaufnahmeeinrichtung 15 als ein erstes Trum 23 erstreckt, an das sich ein im wesentlichen halbkreisförmiger Bogen 24 mit einem vorbestimmten Radius und an diesen ein zweites Trum 25 anschließen, dessen Ende stationär mit der Fahrzeugkarosserie verbunden ist. Der Umlenkbereich für die Leitungsaufnahmeeinrichtung 15 ist hier am hinteren, zum Fahrzeugheck gerichteten Ende der Führungsschiene vorgesehen.

Als Mittel zur Umlenkung der Leitungsaufnahmeeinrichtung 15 ist das zu einem Fahrzeugende gerichtete Ende der kanal- oder gehäuseartigen Führungsvorrichtung vorgesehen, das durch die Umlenkeinrichtung 21 bereitgestellt wird. Entsprechend kann das Ende der Führungsschiene ausgebildet sein. Der kanal- oder gehäuseartige Bereich der Führungsvorrichtung ist hierbei in Verlängerung der Führungsschiene angeordnet, was auch für alle anderen Ausführungsbeispiele gelten kann.

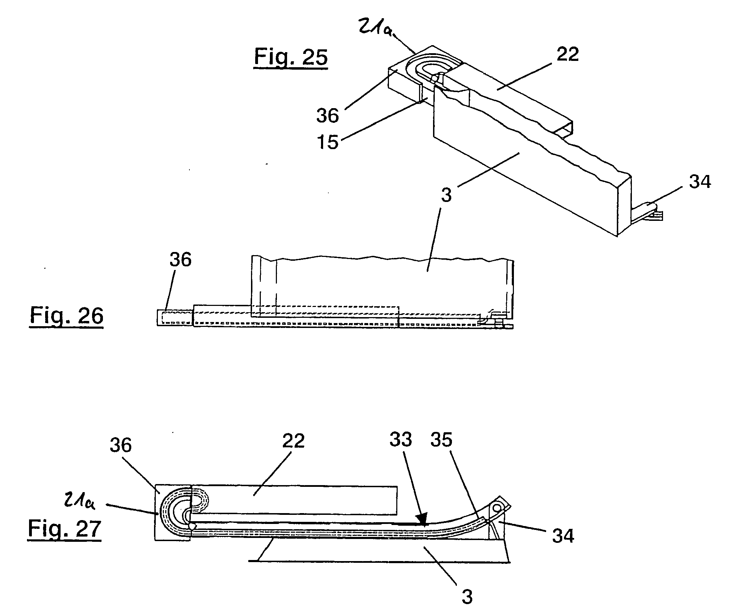

Die Umlenkung des ersten Trums der Leitungsaufnahmeeinrichtung 15 an dem zu einem Fahrzeugende gerichtete Ende der Führungsschiene erfolgt hierbei um ca. 90° (Fig. 1), kann aber auch um ca. 180° erfolgen (Fig. 27). Die Krümmung der Umlenkung des ersten Trums an dem zu einem Fahrzeugende gerichteten Ende der Führungsschiene und die im wesentlichen halbkreisförmige Umlenkung der Leitungsführungseinrichtung 15 zwischen erstem und zweitem Trum sind hierbei bezogen auf die Längserstreckung der Leitungsführungseinrichtung 15 gleichsinnig.

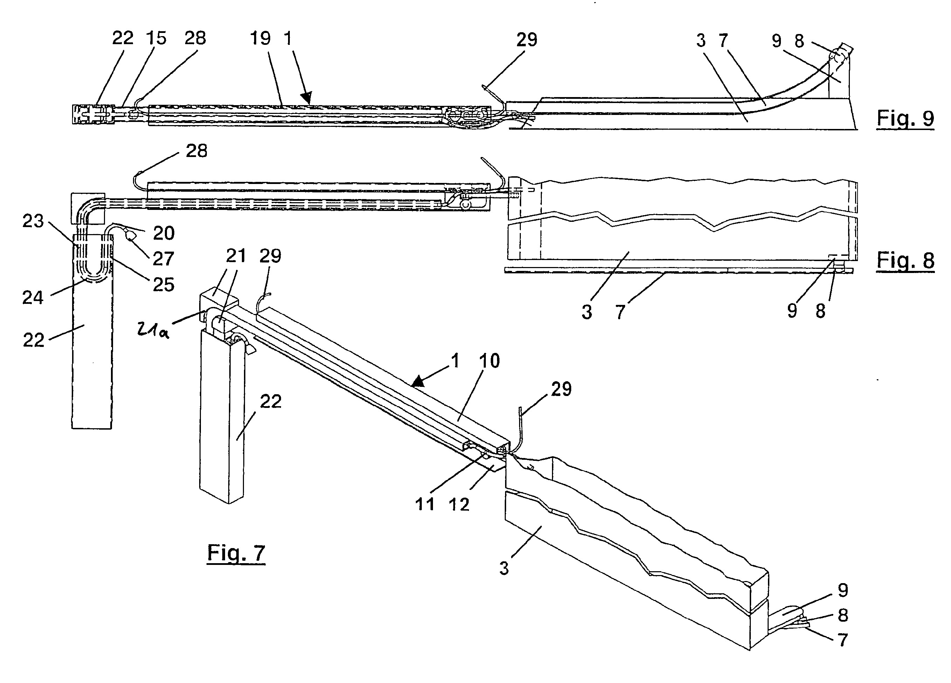

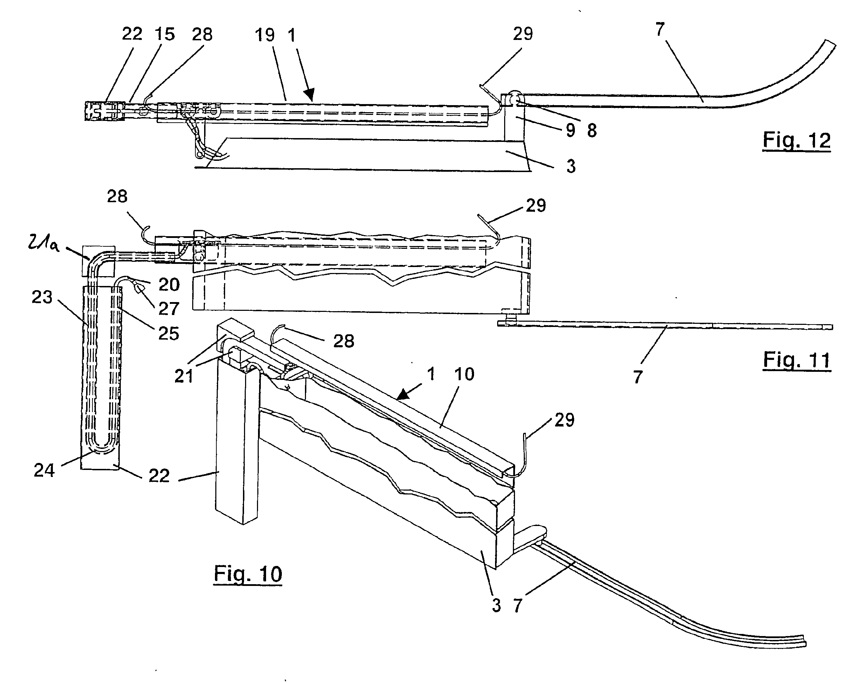

In den Figuren 7 bis 12 ist ein weiteres Ausführungsbeispiel eines Schiebetürsystems gezeigt, bei dem in Abwandlung von dem in den Figuren 1 bis 6 gezeigten Ausführungsbeispiel die aus der Führungsschiene 1 an der von der Schiebetür 3 abgewandten Seite austretende Leitungsführungseinrichtung 15 um 90° nach unten umgeleitet wird. Das als Reservoir für die Leitungsaufnahmeeinrichtung 15 dienende Führungsgehäuse erstreckt sich daher von der Umlenkeinrichtung 21 nach unten und kann ebenfalls in platzsparender Weise in einer Säule der Fahrzeugkarosserie angeordnet sein. Das am freien Ende des zweiten Trums 25 der Leitungsaufnahmeeinrichtung ist wie beim ersten Ausführungsbeispiel am Führungsgehäuse 22 befestigt und daher stationär gegenüber der Fahrzeugkarosserie angeordnet. Die aus dem Endglied austretenden elektrischen Leitungen 20 sind durch einen Stecker 27 mit einem Anschluss an der Fahrzeugkarosserie verbindbar.

Im übrigen entspricht das in den Figuren 7 bis 12 gezeigte Schiebetürsystem dem in den Figuren 1 bis 6 dargestellten Schiebetürsystem, so dass auf die vorstehende Beschreibung zu den Figuren 1 bis 6 verwiesen wird.

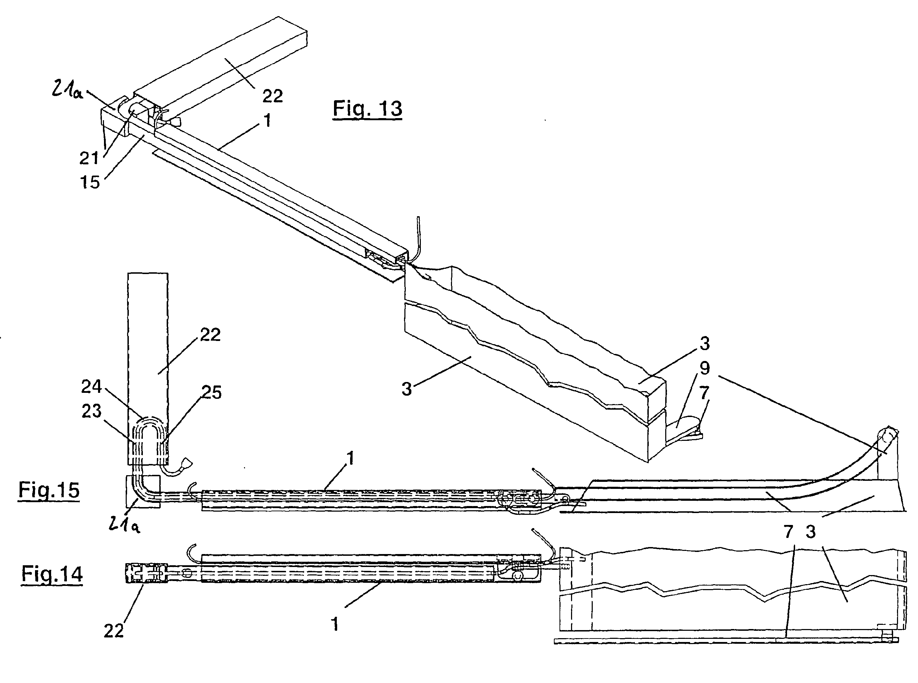

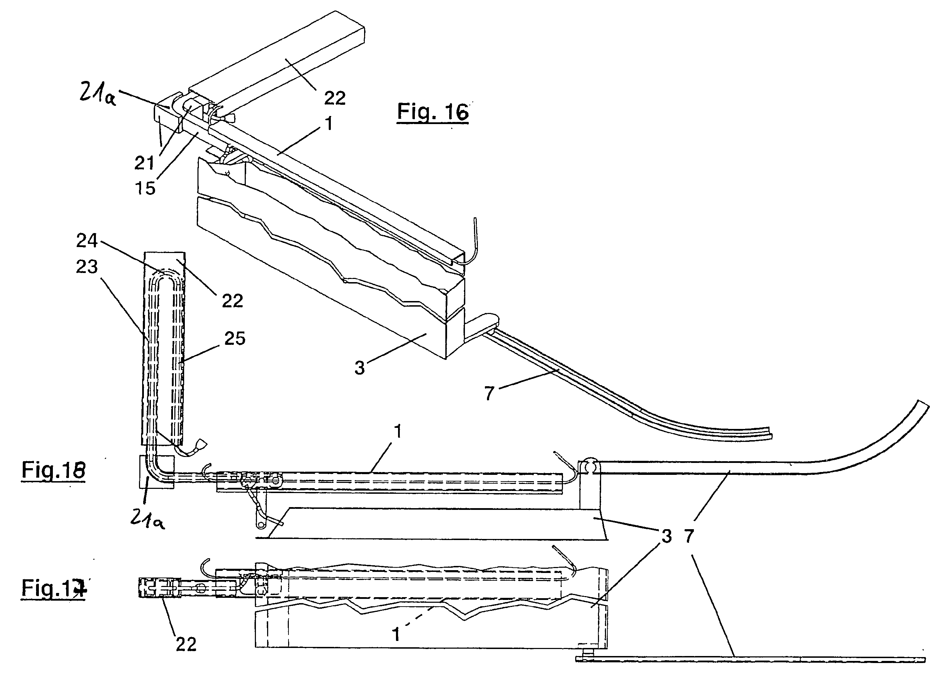

Das in den Figuren 13 bis 18 gezeigte Ausführungsbeispiel eines Schiebetürsystems unterscheidet sich von den vorstehend beschriebenen Ausführungsbeispielen dadurch, dass die als Energieführungskette ausgebildete Leitungsaufnahmeeinrichtung 15 in der Führungsschiene 1 auf der Seite liegend angeordnet ist, d.h. die Schwenkachsen der Glieder 16 weisen in eine vertikale Richtung.

Entsprechend dieser Anordnung der Leitungsaufnahmeeinrichtung 15 ist, wie aus den Figuren 13 bis 18 hervorgeht, eine Umlenkung des aus der Führungsschiene 1 an dem von der Schiebetür 3 abgewandten Ende austretenden Bereichs der Leitungsaufnahmeeinrichtung 15 in horizontaler Ebene, ins Fahrzeuginnere hinein, vorgesehen. Die Umlenkeinrichtung 21 und das als Reservoir für die Leitungsaufnahmeeinrichtung 15 dienende Führungsgehäuse sind daher horizontal angeordnet und können an geeigneter Stelle der Fahrzeugkarosserie installiert werden.

Im übrigen unterscheidet sich das in den Figuren 13 bis 18 gezeigte Ausführungsbeispiel nicht von den vorstehend diskutierten Ausführungsbeispielen.

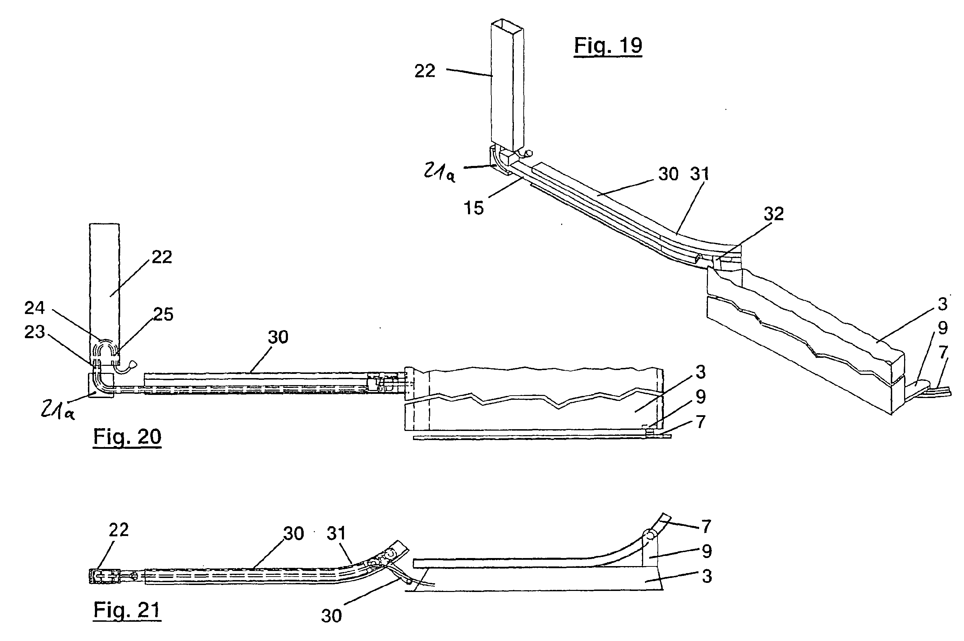

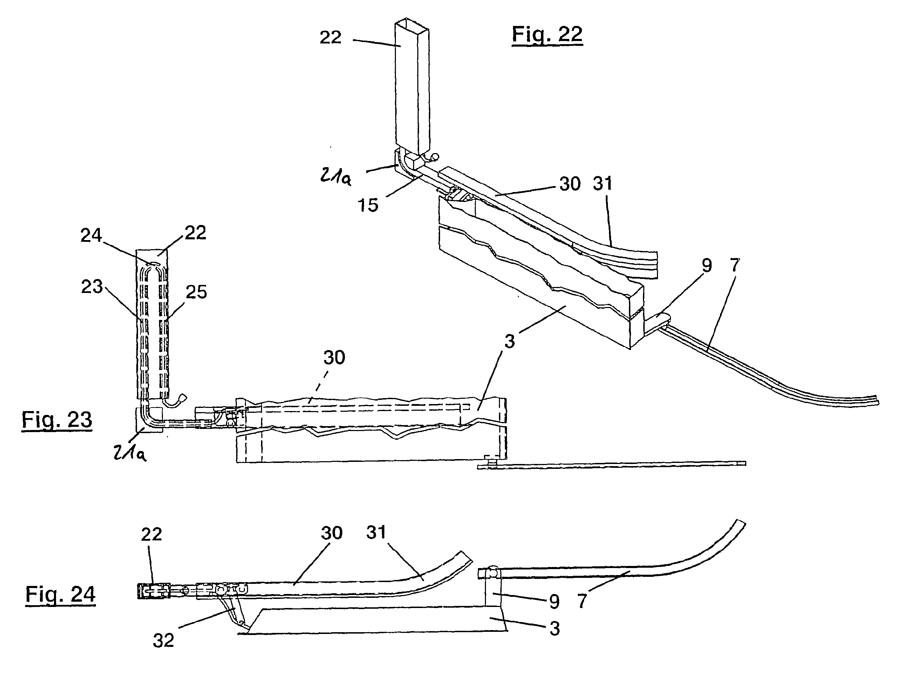

Das in den Figuren 19 bis 24 gezeigte Ausführungsbeispiel entspricht im wesentlichen dem in den Figuren 1 bis 6 dargestellten Ausführungsbeispiel, mit dem Unterschied, dass die erste Führungsschiene 30 an ihrem zur geschlossenen Schiebetür 3 weisenden Ende einen in horizontaler Ebene gekrümmten Bereich 31 zum Fahrzeuginneren hin aufweist. Der gekrümmte Bereich 31 ermöglicht eine Führung der Schiebetür 3 über einen starr am Führungselement 2 angeordneten Haltearm 32 in die Türöffnung hinein, wenn die Schiebetür 3 geschlossen wird, beziehungsweise aus der Türöffnung hinaus, wenn die Schiebetür 3 geöffnet wird.

Wie aus der Anordnung der Umlenkeinrichtung 21 und dem als Reservoir für die Leitungsaufnahmeeinrichtung 15 dienenden Führungsgehäuses 22 hervorgeht, weisen die Schwenkachsen der Glieder 16 der Leitungsaufnahmeeinrichtung 15 in horizontale Richtung, so dass die Umlenkung der Leitungsaufnahmeeinrichtung 15 in das Führungsgehäuse 22 vertikal erfolgen kann. Um der Krümmung des gekrümmten Bereichs 31 der Führungsschiene 30 folgen zu können, muss die Leitungsaufnahmeeinrichtung 15 zumindest in ihrem den Führungselement 2 zugewandten Endbereich um einen durch die Krümmung bestimmten Winkel auch in horizontaler Ebene verschwenkbar sein. Die Verschwenkbarkeit in der die Schwenkachsen der Glieder 16 enthaltenen horizontalen Ebene kann durch geeignete konstruktive Maßnahmen bei den Gliedern 16 erreicht werden.

Sollte ein gekrümmter Bereich 31 der Führungsschiene 30, der eine starre Anbringung des Haltearms 32 an dem Führungselement 2 erlaubt, für eine Leitungsaufnahmeeinrichtung 15 gewünscht sein, die ausschließlich in der senkrecht zu den Schwenkachsen 16 liegenden Ebene verschwenkbar ist, kann die Leitungsaufnahmeeinrichtung 15 wie folgt abgeändert werden.

Einerseits kann vorgesehen sein, dass sich die Leitungsaufnahmeeinrichtung in jeder Position des Verfahrweges in einem geraden Abschnitt der Führungsschiene 30 verbleibt. Dazu kann das betreffende Ende der Leitungsaufnahmeeinrichtung 15 durch ein sich in dessen Längsrichtung erstreckendes Anschlusselement von dem Führungselement 2 derart beabstandet sein, dass wenn dieses sich in der Endposition des Verfahrwegs befindet, das Ende in den geraden Teil der Führungsschiene 30 zum Halten kommt.

Andererseits kann die Leitungsaufnahmeeinrichtung 15 in der Führungsschiene 30 auf der Seite liegend angeordnet werden, so dass sich die Schwenkachsen der Glieder 16 in vertikaler Richtung erstrecken. Die Leitungsaufnahmeeinrichtung 15 muss dann an dem von der geschlossenen Schiebetür 3 abgewandten Ende der Führungsschiene 30 in horizontaler Richtung, entgegen den Figuren 19 bis 24, umgelenkt werden. Die Umlenkeinrichtung 21 und das als Reservoir für die Leitungsaufnahmeeinrichtung 15 dienende Führungsgehäuse 22 sind dann so wie in den Figuren 13 bis 18 gezeigt anzuordnen.

Bei dem in den Figuren 25 bis 30 gezeigten Ausführungsbeispiel ist die Führungsschiene 33 für das Führungselement 2 der Schiebetür 3 im unteren Bereich der Fahrzeugkarosserie längs der Türöffnung angeordnet und der Haltearm 34 am vorderen, zur Fahrzeugfront gerichteten Endbereich der Schiebetür 3 angeordnet.

Die Führungsschiene 33 weist an ihrem vorderen Ende einen ins Fahrzeuginnere gerichteten gekrümmten Bereich 35 auf. Auf diese Weise kann bei einem starr am Führungselement 2 angebrachten Haltearm 34 die Schiebetür 3 beim Schließen in die Türöffnung hinein und beim Öffnen aus der Türöffnung hinaus bewegt werden.

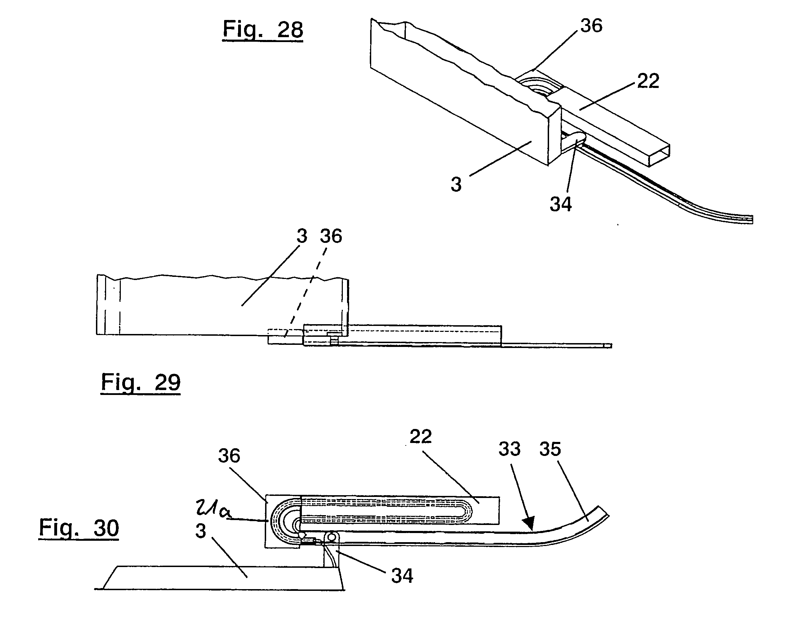

Damit die Leitungsaufnahmeeinrichtung 15 sich bei geschlossener Schiebetür 3 in den gekrümmten Bereich 35 der Führungsschiene 33 hinein erstrecken kann, ist sie, wie insbesondere aus den Figuren 27 und 30 hervorgeht, auf der Seite liegend in der Führungsschiene 33 angeordnet, so dass die Schwenkachsen der Glieder 16 vertikal ausgerichtet sind. Entsprechend erfolgt die Umlenkung der Leitungsaufnahmeeinrichtung 15 an dem vom gekrümmten Bereich 35 abgewandten Ende der Führungsschiene 33 in horizontaler Ebene in das Führungsgehäuse 22. Wie in den Figuren 27 und 30 gezeigt ist, erfolgt die Umlenkung bei diesem Ausführungsbeispiel um 180° durch eine entsprechende Umlenkeinrichtung 36, so dass das als Reservoir für die Leitungsaufnahmeeinrichtung 15 dienende Führungsgehäuse 22 parallel zur Führungsschiene 33 angeordnet ist.

### Schiebetürsystem

### Bezugszeichenliste

- 1: erste Führungsschiene
- 2: erstes Führungselement
- 3: Schiebetür
- 4: Gelenk
- 5: Haltearm
- 6: Gelenk
- 7: zweite Führungsschiene
- 8: zweites Führungselement
- 9: Haltearm
- 10: Oberseite
- 11: untere Rolle
- 12: Boden
- 13: Führungsrolle
- 14: Führungsrolle
- 15: Leitungsaufnahmeeinrichtung
- 16: Glied
- 17: Endglied
- 19: Seitenwand
- 20: Leitung
- 21: Umlenkeinrichtung
- 22: Führungsgehäuse
- 23: erstes Trum
- 24: Bogen
- 25: zweites Trum
- 26: Endglied
- 27: Stecker
- 28: Kabelstrang
- 29: Kabelstrang
- 30: erste Führungsschiene
- 31: gekrümmter Bereich
- 32: Haltearm
- 33: Führungsschiene
- 34: Haltearm
- 35: gekrümmter Bereich
- 36: Umlenkeinrichtung

## Patentansprüche

1. Schiebetürsystem für ein Fahrzeug mit einer eine Türöffnung aufweisenden Fahrzeugkarosserie und einer Schiebetür (3) mit einer an oder in der Fahrzeugkarosserie in der Nähe der Türöffnung anbringbaren Führungsschiene (1; 30; 33), einem längs der Führungsschiene (1; 30; 33) verfahrbaren.Führungselement (2), das über einen Haltearm (5; 32; 34) mit der Schiebetür .(3) verbunden ist, einer Leitungsaufnahmeeinrichtung (15) aus schwenkbar miteinander verbundenen Gliedern (16) zur Aufnahme und Führung elektrischer Leitungen (20) von einem Anschluss an der Fahrzeugkarosserie zu einem Anschluss an der Schiebetür (3), wobei die Leitungsaufnahmeeinrichtung (15) in einer Führungsvorrichtung geführt ist, **dadurch gekennzeic hnet**, dass die Führungsvorrichtung für die Leitungsaufnahmeeinrichtung (15) in die Führungsschiene (1; 30; 33) für das Führungselement (2) der Schiebetür (3) integriert ist, dass an einem zu einem Fahrzeugende, der Fahrzeugfront oder dem Fahrzeugheck, gerichteten Ende der Führungsschiene oder der Führungsvorrichtung ein Umlenkbereich für die Leitungsaufnahmeeinrichtung (15) vorgesehen ist, durch den diese beim Verfahren in Richtung auf das fahrzeugende um einen bestimmten Winkel in eine bestimmte Richtung umgelenkt wird, und an den Umlenkbereich eine kanalförmige Führung angeschlossen ist, in der sich der umgelenkte Abschnitt der Leitungsaufnahmeeinrichtung (15) als ein erstes Trum (23) erstreckt, an das sich ein im wesentlichen halbkreisförmiger Bogen (24) mit einem vorbestimmten Radius und an diesen ein zweites Trum (25) anschließen, dessen Ende stationär mit der Fahrzeugkarosserie verbunden ist, und dass die Krümmung der Umlenkung des ersten Trums der Leitungsaufnahmeeinrichtung (15) an dem zu einem Fahrzeugende gerichtete Ende der Führungsschiene oder der Führungsvorrichtung und die im wesentlichen halbkreisförmige Umlenkung der Leitungsführungseinrichtung (15) zwischen erstem und zweitem Trum bezogen auf die Längserstreckung der Leitungsführungseinrichtung (15) gleichsinnig sind.

2. Schiebetürsystem nach Anspruch 1, **dadurch gekennzeichnet, dass** die Führungsschiene (1; 30) außen an oder in der Fahrzeugkarosserie in dem Bereich angeordnet ist, über den die Schiebetür (3) beim Öffnen und Schließen bewegt wird, und der Haltearm (5; 32) im hinteren, zum Fahrzeugheck gerichteten Endbereich der Schiebetür (3) angeordnet ist.

3. Schiebetürsystem nach Anspruch 1, **dadurch gekennzeichnet, dass** die Führungsschiene (33) an oder im unteren Bereich der Fahrzeugkarosserie längs der Türöffnung angeordnet ist und der Haltearm (34) am vorderen, zur Fahrzeugfront gerichteten Endbereich der.Schiebetür (3) angeordnet ist.

4. Schiebetürsystem nach Anspruch 1, **dadurch gekennzeichnet, dass** die Führungsschiene an oder im oberen Bereich der Fahrzeugkarosserie längs der Türöffnung angeordnet ist und der Haltearm am vorderen Endbereich der Schiebetür angeordnet ist.

5. Schiebetürsystem nach einem der Ansprüche 1 bis 4, **dadurch gekennzeichnet, dass** der Haltearm (5; 32; 34) zwei um eine im wesentlichen vertikale Achse schwenkbar miteinander verbundene Armteile aufweist oder schwenkbar an der Schiebetür (3) gelagert ist.

6. Schiebetürsystem nach einem der Ansprüche 1 bis 5, **dadurch gekennzeichnet, dass** die Führungsschiene (30, 33) in ihrem vorderen, zur Fahrzeugfront gerichteten Endbereich einen im wesentlichen horizontal verlaufenden gekrümmten Bereich (31, 35) aufweist.

7. Schiebetürsystem nach einem der Ansprüche 1 bis 6, **dadurch gekennzeichnet, dass** ein Ende der Leitungsaufnahmeeinrichtung (15) über ein Anschlusselement mit dem Führungselement (2) verbunden ist.

8. Schiebetürsystem nach Anspruch 7, **dadurch gekennzeichnet, dass** das Anschlusselement gegenüber dem Führungselement (2) um eine im wesentlichen senkrechte Achse verschwenkbar ist.

9. Schiebetürsystem nach einem der Ansprüche 1 bis 8, **dadurch gekennzeichnet, dass** die elektrischen Leitungen (20) aus einem Ende der Leitungsaufnahmeeinrichtung austretend über den Haltearm(5; 32, 34) der Schiebetür (3) zugeführt sind.

10. Schiebetürsystem nach einem der Ansprüche 1 - 9, **dadurch gekennzeichnet, dass** die Führungsschiene (1; 30, 33) kanalförmig mit einer sich in Längsrichtung erstreckenden Öffnung ausgebildet ist, durch die sich der Haltearm (5, 32, 34) erstreckt, und das Führungselement (2) mindestens eine Rolle (11) aufweist, die um eine im wesentlichen horizontale Achse drehbar in der kanalförmigen Führungsschiene (1; 30; 33) angeordnet und am Haltearm (5; 32; 34) gelagert ist.

11. Schiebetürsystem nach Anspruch 8 und 10, **dadurch gekennzeichnet, dass** die Leitungsaufnahmeeinrichtung (15) ein Endglied (17) aufweist, das über ein bügelförmiges Teil mit einem sich in die Führungsschiene (30; 33) hinein erstreckenden Teil des Haltearms (32; 34) verbunden ist, und das bügelförmige Teil am Endglied (17) und/oder an dem sich in die Führungsschiene (30; 33) hinein erstreckenden Teil des Haltearms (32; 34) um eine im wesentlichen vertikale Achse schwenkbar gelagert ist.

12. Schiebetürsystem nach einem der Ansprüche 1 bis 11, **dadurch gekennzeichnet, dass** der Umlenkbereich für die Leitungsaufnahmeeinrichtung (15) am hinteren, zum Fahrzeugheck gerichteten Ende der Führungsschiene oder der Führungsvorrichtung vorgesehen ist, durch den diese beim Verfahren in Richtung zum Fahrzeugheck um einen bestimmten Winkel in eine bestimmte Richtung umgelenkt wird.

13. Schiebetürsystem nach einem der Ansprüche 1 bis 12, **dadurch gekennzeichnet, dass** als Mittel zur Umlenkung der Leitungsaufnahmeeinrichtung (15) das zu einem Fahrzeugende gerichtete Ende der Führungsschiene oder ein kanal- oder gehäuseartiger Bereich (21a) der Führungsvorrichtung vorgesehen ist.

14. Schiebetürsystem nach einem der Ansprüche 1 bis 13, **dadurch gekennzeichnet, dass** die Umlenkung des ersten Trums der Leitungsaufnahmeeinrichtung (15) an dem zu einem Fahrzeugende gerichtete Ende der Führungsschiene oder der Führungsvorrichtung um ca. 90° oder um ca. 120° bis ca. 180° erfolgt.

15. Schiebetürsystem nach einem der Ansprüche 1 bis 14, **dadurch gekennzeichnet, dass** die benachbart der Schiebetür im wesentlichen horizontal geführte Leitungsaufnahmeeinrichtung (15) im Umlenkbereich in eine im wesentlichen vertikale Richtung oder in eine Richtung entgegengesetzt der Bewegungsrichtung der zu öffnenden Schiebetür erfolgt.

16. Schiebetürsystem nach einem der Ansprüche 1 bis 15, **dadurch gekennzeichnet, dass** die kanalförmige Führung als langgestrecktes im wesentlichen quaderförmiges Führungsgehäuse (22) ausgebildet ist, in dessen einer Stirnseite eine Öffnung zur Durchführung des umgelenkten Abschnitts der Leitungsaufnahmeeinrichtung (15) ausgebildet ist und in dem an zwei gegenüberliegenden Längsseiten die jeweils nach außen weisenden Seiten der Trums (23, 25) geführt sind.

17. Schiebetürsystem nach einem der Ansprüche 1 bis 16, **dadurch gekennzeichnet, dass** die kanalförmige Führung in einer Säule der Fahrzeugkarosserie angeordnet ist.

18. Schiebetürsystem nach einem der Ansprüche 1 bis 17, **gek enn**- **zeichnet durch** eine Antriebseinrichtung zur Bewegung der Schiebetür (3) längs der Führungsschiene (1; 30; 33).

19. Schiebetürsystem nach Anspruch 18, **dadurch gekennzeichnet, dass** die Antriebseinrichtung einen in der Fahrzeugkarosserie angeordneten reversiblen Motor und eine vom Motor angetriebene Zugeinrichtung aufweist, die in Längsrichtung der Führungsschiene (1; 30; 33) mit dem Führungselement (2) der dem Haltearm (5; 32; 34) verbunden ist und mit der das Führungselement (2) bzw. der Haltearm (5; 32; 34) längs der Führungsschiene (1; 30; 33) in beiden Richtungen in Abhängigkeit von der Drehrichtung des Motors verfahrbar ist.

20. Schiebetürsystem nach Anspruch 19, **dadurch gekennzeichnet, dass** die Zugeinrichtung zwei mit jeweils einer Seite des Führungselement (2) oder des Haltearms (5; 32; 34) verbundene Kabelstränge (28; 29) aufweist, die längs der Führungsschiene (1; 30; 33) verlaufen und an deren Enden zu einer Antriebseinheit umgelenkt werden, die in Abhängigkeit von der Drehrichtung des Motors eine Zugkraft auf den einen oder anderen Kabelstrang (28, 29) ausübt.

21. Schiebetürsystem nach Anspruch 20, **dadurch gekennzeichnet, dass** die Zugeinrichtung durch einen Zahnriemen gebildet ist, der vom Motor über ein Ritzel antreibbar ist.

22. Schiebetürsystem nach einem der Ansprüche 18 bis 21, **dadurch gekennzeichnet, dass** die Antriebseinrichtung einen in der Schiebetür (3) angeordneten Motor, ein vom Motor angetriebenes und am Haltearm angeordnetes Ritzel und eine mit dem Ritzel kämmende, längs der Führungsschiene (1; 30; 33) verlaufende Zahnreihe aufweist.

23. Schiebetürsystem nach einem der Ansprüche 1 bis 22, **dadurch gekennzeichnet, dass** zur Führung der Schiebetür mindestens eine zweite Führungsschiene (7) an der Fahrzeugkarosserie im oberen und/oder unteren Bereich längs der Türöffnung angeordnet ist mit einem längs der zweiten Führungsschiene (7) verfahrbaren zweiten Führungselement (8) , das über einen zweiten Haltearm (9) mit dem vorderen, zur Fahrzeugfront gerichteten Bereich der Schiebetür (3) verbunden ist.

24. Schiebetürsystem nach einem der Ansprüche 1 bis 23, **dadurch gekennzeichnet, dass** der benachbart dem Führungselement (2) angeordnete Bereich (15a) der Leitungsaufnahmeeinrichtung (15) unmittelbar in der Spur des Führungselementes (2) verfahren wird.

## Claims

1. A sliding door system for a vehicle with a vehicle body having a door opening and a sliding door (3), comprising a guide rail (1; 30; 33) which can be mounted on or in the vehicle body in the proximity of the door opening, a guide element (2) which is displaceable along the guide rail (1; 30; 33) and which is connected to the sliding door (3) by way of a holding arm (5; 32; 34), a line receiving means (15) of pivotably interconnected members (16) for receiving and guiding electric lines (20) from a connection on the vehicle body to a connection at the sliding door (3), wherein the line receiving means (15) is guided in a guide device, **characterised in that** the guide device for the line receiving means (15) is integrated into the guide rail (1; 30; 33) for the guide element (2) of the sliding door (3), provided at an end of the guide rail or the guide device, which is directed towards an end of the vehicle, the front of the vehicle or the tail of the vehicle, is a deflection region for the line receiving means (15), by which it is deflected through a given angle in a given direction upon displacement in a direction towards the end of the vehicle, and connected to the deflection region is a channel-shaped guide in which the deflected portion of the line receiving means (15) extends as a first run (23) which is adjoined by a substantially semicircular arc (24) of a predetermined radius and adjoining which is a second run (25), the end of which is connected stationarily to the vehicle body, and the curvature of the deflection of the first run of the line receiving means (15) at the end of the guide rail or the guide device, which is directed towards an end of the vehicle, and the substantially semicircular deflection of the line guide means (15) between the first and second runs are in the same direction with respect to the longitudinal extent of the line guide means (15).

2. A sliding door system as set forth in claim 1 **characterised in that** the guide rail (1; 30) is arranged externally on or in the vehicle body in the region over which the sliding door (3) is moved when being opened and closed, and the holding arm (5; 32) is arranged in the rear end region of the sliding door (3), which is directed towards the tail of the vehicle.

3. A sliding door system as set forth in claim 1 **characterised in that** the guide rail (33) is arranged on or in the lower region of the vehicle body along the door opening and the holding arm (34) is arranged at the front end region of the sliding door (3), which is directed towards the front of the vehicle.

4. A sliding door system as set forth in claim 1 **characterised in that** the guide rail is arranged on or in the upper region of the vehicle body along the door opening and the holding arm is arranged at the front end region of the sliding door.

5. A sliding door system as set forth in one of claims 1 through 4 **characterised in that** the holding arm (5; 32; 34) has two arm portions which are connected together pivotably about a substantially vertical axis or is mounted pivotably to the sliding door (3).

6. A sliding door system as set forth in one of claims 1 through 5 **characterised in that** in its front end region which is directed towards the front of the vehicle the guide rail (30, 33) has a substantially horizontally extending curved region (31, 35).

7. A sliding door system as set forth in one of claims 1 through 6 **characterised in that** an end of the line receiving means (15) is connected to the guide element (2) by way of a connecting element.

8. A sliding door system as set forth in claim 6 and claim 7 **characterised in that** the connecting element is pivotable with respect to the guide element (2) about a substantially perpendicular axis.

9. A sliding door system as set forth in one of claims 1 through 8 **characterised in that** the electric lines (20) issuing from an end of the line receiving means are passed by way of the holding arm (5; 32, 34) to the sliding door (3).

10. A sliding door system as set forth in one of claims 1 through 9 **characterised in that** the guide rail (1; 30, 33) is of a channel-shaped configuration with an opening which extends in the longitudinal direction and through which the holding arm (5, 32, 34) extends, and the guide element (2) has at least one roller (11) which is arranged in the channel-shaped guide rail (1; 30; 33) rotatably about a substantially horizontal axis and is mounted to the holding arm (5; 32; 34).

11. A sliding door system as set forth in claim 8 and claim 10 **characterised in that** the line receiving means (15) has an end member (17) which is connected by way of a loop-shaped portion to a part of the holding arm (32; 34) which extends into the guide rail (30; 33), and the loop-shaped portion is mounted pivotably about a substantially vertical axis at the end member (17) and/or at the part of the holding arm (32; 34) which extends into the guide rail (30; 33).

12. A sliding door system as set forth in one of claims 1 through 11 **characterised in that** the deflection region for the line receiving means (15) is provided at the rear end, which is directed towards the tail of the vehicle, of the guide rail or the guide device, by which it is deflected through a given angle in a given direction upon displacement in a direction towards the tail of the vehicle.

13. A sliding door system as set forth in claim 1 through 12 **characterised in that** the means for deflection of the line receiving means (15) is the end of the guide rail, which is directed towards an end of the vehicle, or a channel-like or housing-like region (21a) of the guide device.

14. A sliding door system as set forth in one of claims 1 through 13 **characterised in that** deflection of the first run of the line receiving means (15) at the end of the guide rail or the guide device, which is directed towards an end of the vehicle, is through about 90° or through about 120° to about 180°.

15. A sliding door system as set forth in one of claims 1 through 14 **characterised in that** the line receiving means (15) which is guided substantially horizontally in adjacent relationship with the sliding door is effected in the deflection region into a substantially vertical direction or into a direction opposite to the direction of movement of the sliding door which is to be opened.

16. A sliding door system as set forth in one of claims 1 through 15 **characterised in that** the channel-shaped guide is in the form of an elongate substantially parallelepipedic guide housing (22), in the one end of which there is provided an opening for the passage therethrough of the deflected portion of the line receiving means (15) and in which the respective outwardly facing sides of the runs (23, 25) are guided at two oppositely disposed longitudinal sides.

17. A sliding door system as set forth in one of claims 1 through 16 **characterised in that** the channel-shaped guide is arranged in a pillar of the vehicle body.

18. A sliding door system as set forth in one of claims 1 through 17 **characterised by** a drive device for moving the sliding door (3) along the guide rail (1; 30; 33).

19. A sliding door system as set forth in claim 18 **characterised in that** the drive device has a reversible motor arranged in the vehicle body and a pulling device which is driven by the motor and which in the longitudinal direction of the guide rail (1; 30; 33) is connected to the guide element (2) or the holding arm (5; 32; 34) and with which the guide element (2) or the holding arm (5; 32; 34) is displaceable along the guide rail (1; 30; 33) in both directions in dependence on the direction of rotation of the motor.

20. A sliding door system as set forth in claim 19 **characterised in that** the pulling means has two cable runs (28; 29) which are connected to a respective side of the guide element (2) or the holding arm (5; 32; 34) and which extend along the guide rail (1; 30; 33) and at the ends thereof are deflected to a drive unit which exerts a pulling force on one cable run (28, 29) or the other, in dependence on the direction of rotation of the motor.

21. A sliding door system as set forth in claim 20 **characterised in that** the pulling means is formed by a toothed belt drivable by the motor by way of a pinion.

22. A sliding door system as set forth in one of claims 18 through 21 **characterised in that** the drive device has a motor arranged in the sliding door (3), a pinion driven by the motor and arranged on the holding arm and a row of teeth meshing with the pinion and extending along the guide rail (1; 30; 33).

23. A sliding door system as set forth in one of claims 1 through 22 **characterised in that**, to guide the sliding door, at least one second guide rail (7) is arranged on the vehicle body in the upper and/or lower region along the door opening, with a second guide element (8) which is displaceable along the second guide rail (7) and which is connected by way of a second holding arm (9) to the front region of the sliding door (3), which is directed towards the front of the vehicle.

24. A sliding door system as set forth in one of claims 1 through 23 **characterised in that** the region (15a) of the line receiving means (15), which is arranged in adjacent relationship with the guide element (2), is displaced directly in the track of the guide element (2).

## Revendications

1. Système de porte coulissante destiné à un véhicule comportant une carrosserie avec une ouverture de porte et une porte coulissante (3) avec une coulisse (1 ; 30 ; 33) qui peut être installée sur ou dans une carrosserie d'un véhicule près d'une ouverture de porte, un élément de guidage (2) mobile le long de la coulisse (1 ; 30 ; 33) et relié à la porte coulissante (3) par un bras de support (5 ; 32 ; 34), un dispositif de logement de câble (15) en membres (16) reliés l'un à l'autre de manière pivotante et destinés à loger et guider des câbles électriques (20) d'un raccordement sur la carrosserie du véhicule au raccordement sur la porte coulissante (3), ledit dispositif de logement de câble (15) étant guidé dans un dispositif de guidage, **caractérisé en ce que** le dispositif de guidage du dispositif de logement de câble (15) est intégré dans la coulisse (1 ; 30 ; 33) de l'élément de guidage (2) de la porte coulissante (3), **en ce que**, pour le dispositif de logement de câble (15), il est prévue sur une extrémité de la coulisse ou du dispositif de guidage tournée vers une extrémité du véhicule, tournée vers un front du véhicule ou tournée vers une arrière du véhicule, une zone de changement de direction par laquelle le dispositif de logement de câble subit un changement de direction d'un angle déterminé et vers une direction déterminée lors du mouvement vers l'extrémité du véhicule, et **en ce qu'**une guidage en forme de canal joint la zone de changement de direction, à l'intérieur dudit guidage en forme de canal s'étend le tronçon du dispositif de logement de câble (15) changé en direction comme un premier brin (23) auquel se joint un arc (24) sensiblement semi-circulaire (24) de rayon déterminé auquel se joint un deuxième brin (25) dont l'extrémité est reliée à la carrosserie du véhicule de manière fixe, et **en ce que** la courbure du changement de direction du premier brin du dispositif de logement de câble (15) sur l'extrémité de la coulisse ou du dispositif de guidage tournée vers l'une des extrémités du véhicule et le changement de direction sensiblement semi-circulaire du dispositif de guidage de câble (15) entre le premier brin et le deuxième brin ont le même sens par rapport à l'extension longitudinale du dispositif de guidage de câble (15).

2. Système de porte coulissante selon la revendication 1, **caractérisé en ce que** la coulisse (1 ; 30) est disposée à l'extérieur ou à l'intérieur de la carrosserie du véhicule et dans la partie à travers de laquelle la porte coulissante (3) est mue lors de son ouverture ou fermeture, et **en ce que** le bras de support (5 ; 32) est disposée dans la partie d'extrémité arrière de la porte coulissante (3) tournée vers l'arrière du véhicule.

3. Système de porte coulissante selon la revendication 1, **caractérisé en ce que** la coulisse (33) est disposée sur ou dans la partie inférieure de la carrosserie et le long de l'ouverture de porte et **en ce que** le bras de support (34) est disposé à la partie d'extrémité antérieure de la porte coulissante (3) tournée vers le front du véhicule.

4. Système de porte coulissante selon la revendication 1, **caractérisé en ce que** la coulisse est disposée sur ou dans la partie supérieure de la carrosserie du véhicule le long de l'ouverture de porte et **en ce que** le bras de support est disposé à la partie d'extrémité antérieure de la porte coulissante.

5. Système de porte coulissante selon l'une des revendications 1 à 4, **caractérisé en ce que** le bras de support (5 ; 32 ; 34) comporte deux parties de bras qui sont reliées l'une à l'autre de façon pivotante autour d'un axe sensiblement vertical ou qui sont logées de façon pivotante sur la porte coulissante (3).

6. Système de porte coulissante selon l'une des revendications 1 à 5, **caractérisé en ce que** la coulisse (30, 33) comporte dans sa partie d'extrémité antérieure tournée vers le front du véhicule une partie courbée (31, 35) qui s'étend sensiblement horizontalement.

7. Système de porte coulissante selon l'une des revendications 1 à 6, **caractérisé en ce que** une extrémité du dispositif de logement de câble (15) est reliée à l'élément de guidage (2) par un élément de raccordement.

8. Système de porte coulissante selon les revendications 6 et 7, **caractérisé en ce que** l'élément de raccordement peut être pivoté par rapport à l'élément de guidage (2) autour d'un axe sensiblement vertical.

9. Système de porte coulissante selon l'une des revendications 1 à 8, **caractérisé en ce que** les câbles électriques (20) sortant d'une extrémité du dispositif de logement de câble sont alimentés à la porte coulissante (3) par le bras de support (5 ; 32, 34).

10. Système de porte coulissante selon l'une des revendications 1 à 9, **caractérisé en ce que** la coulisse (1 ; 30, 33) est en forme de canal avec une orifice s'étendant en la direction longitudinale, au-travers de laquelle orifice s'étend le bras de support (5, 32, 34), et **en ce que** l'élément de guidage (2) comporte au moins un galet (11) qui est disposé de manière pivotante autour d'un axe sensiblement horizontal dans la coulisse (1 ; 30 ; 33) en forme de canal et qui est monté sur le bras de support.

11. Système de porte coulissante selon les revendications 8 et 10, **caractérisé en ce que** le dispositif de logement de câble (15) comporte un membre extrême (17) qui est relié par une pièce recourbée à une partie du bras de support (32 ; 34) qui s'étant dans la coulisse (30 ; 33), et **en ce que** la pièce recourbée est montée de manière pivotante autour d'un axe sensiblement vertical sur le membre extrême (17) et/ou sur la partie du bras de support (30 ; 33) s'étendant dans la coulisse (30 ; 33).

12. Système de porte coulissante selon l'une des revendications 1 à 11, **caractérisé en ce que** la zone de changement de direction du dispositif de logement de câble (15) est prévue sur l'extrémité arrière de la coulisse ou du dispositif de guidage tournée vers l'arrière du véhicule, par laquelle zone de changement de direction la coulisse ou le dispositif de guidage subit un changement de direction d'un angle déterminé et en une direction déterminée lors du mouvement en la direction vers l'arrière du véhicule.

13. Système de porte coulissante selon l'une des revendications 1 à 12, **caractérisé en ce que**, comme un moyen pour le changement de direction du dispositif de logement de câble (15), il est prévue l'extrémité de la coulisse tournée vers l'un des extrémités du véhicule ou une partie en forme de canal ou boîte (21a) du dispositif de guidage.

14. Système de porte coulissante selon l'une des revendications 1 à 13, **caractérisé en ce que** le changement de direction du premier brin du dispositif de logement de câble (15) sur l'extrémité de la coulisse ou du dispositif de guidage tournée vers l'une des extrémités du véhicule s'est effectué d'environ 90° ou d'environ 120° jusqu'à d'environ 180°.

15. Système de porte coulissante selon l'une des revendications 1 à 14, **caractérisé en ce que** le dispositif de logement de câble (15) guidé de manière sensiblement horizontale et voisin de porte coulissante subit, dans la zone de changement de direction, un changement vers une direction sensiblement verticale ou vers une direction opposée à la direction de mouvement de la porte coulissante à ouvrir.

16. Système de porte coulissante selon l'une des revendications 1 à 15, **caractérise en ce que** le guidage en forme de canal est configuré comme une boîte de guidage (22) en forme allongée et sensiblement parallélépipédique, dans un front de laquelle est formée une orifice pour le passage d'une partie du dispositif de logement de câble (15) changée en sa direction, et dans laquelle boîte sont guidées sur deux côtés longitudinales opposées les faces des brins (23, 25) respectivement tournées vers l'extérieure.

17. Système de porte coulissante selon l'une des revendications 1 à 16, **caractérisé en ce que** le guidage en forme de canal est disposé dans une colonne de la carrosserie du véhicule.

18. Système de porte coulissante selon l'une des revendications 1 à 17, **caractérisé par** un dispositif de commande destiné au mouvement de la porte coulissante (3) le long de la coulisse (1 ; 30, 33).

19. Système de porte coulissante selon la revendication 18, **caractérisé en ce que** le dispositif de commande comporte un moteur réversible disposé dans la carrosserie du véhicule et un dispositif de traction qui est entrainé par le moteur et qui est relié à l'élément de guidage (2) ou au bras de support (5 ; 32 ; 34) en la direction longitudinale de la coulisse (1 ; 30 ; 33) et avec lequel l'élément de guidage (2) respectivement le bras de support (5 ; 32 ; 34) peuvent être déplacés le long de la coulisse (1 ; 30 ; 33) en les deux directions en fonction du sens de rotation du moteur.

20. Système de porte coulissante selon la revendication 19, **caractérisé en ce que** le dispositif de traction comporte deux faisceaux de câbles (28 ; 29) respectivement reliés avec une côté du dispositif de guidage (2) ou du bras de support (5 ; 32 ; 34), lesdits faisceaux de câbles s'étendant le long de la coulisse (1 ; 30 ; 33) et subissant à ses extrémités une change de direction vers une unité de commande qui exerce une force de traction sur l'un ou sur l'autre faisceau de câble (28, 29) en fonction du sens de rotation du moteur.

21. Système de porte coulissante selon la revendication 20, **caractérisé en ce que** le dispositif de traction est formé par une courroie dentée qui peut être entrainée par le moteur par le biais d'un pignon.

22. Système de porte coulissante selon l'une des revendications 18 à 21, **caractérisé en ce que** le dispositif de commande comporte un moteur disposé dans la porte coulissante (3), un pignon entrainé par le moteur et disposé sur le bras de support, et une rangée de dents s'étendant le long de la coulisse (1 ; 30 ; 33) et s'engrenant avec le pignon.

23. Système de porte coulissante selon l'une des revendications 1 à 22, **caractérisé en ce que**, pour le guidage de la porte coulissante, il est prévue au moins une deuxième coulisse (7) sur la carrosserie du véhicule dans les parties supérieures et/ou inférieures le long de l'ouverture de porte, avec un deuxième élément de guidage (8) qui est mobile le long de la deuxième coulisse (7) et qui est relié par un deuxième bras de support (9) avec la partie antérieure de la porte coulissante (3) tournée vers le front du véhicule.

24. Système der porte coulissante selon l'une des revendications 1 à 23, **caractérisé en ce que** la partie (15a) du dispositif de logement de câble (15) voisine à l'élément de guidage (2) est déplacée directement dans la trace de l'élément de guidage (2).
